# EUROPÄISCHE PATENTSCHRIFT

(11) **EP 0 776 741 B1**
(45) Veröffentlichungstag und Bekanntmachung des Hinweises auf die Patenterteilung: **26.09.2001**
(21) Anmeldenummer: 96116730.1
(22) Anmeldetag: 18.10.1996
(51) Int. Cl.: B26F 1/24

(54) **Nadelwalzenordnung mit mehreren Nadelwalzen zur Perforierung einer durchlaufenden Materialbahn**
Perforating cylinders assembly with several pin rollers for perforating a running web
Ensemble de cylindres de perforation équipé de plusieurs rouleaux à aiguilles pour perforer une nappe défilant en continu

(30) Priorität: 28.11.1995 DE 19544330
(43) Veröffentlichungstag der Anmeldung: 04.06.1997
(73) Patentinhaber: Windmöller & Hölscher, D-49525 Lengerich (DE)
(72) Erfinder: Brinkmeier, Friedhelm, 49525 Lengerich (DE); Seeberger, Achim, 49525 Lengerich (DE)

(56) Entgegenhaltungen:
- WO-A-94/09954
- GB-A- 2 177 645
- US-A- 4 167 131
- US-A- 5 007 272

## Beschreibung

Die Erfindung betrifft eine Nadelwalzenanordnung mit mehreren Nadelwalzen, die in einem Drehgestell auf einer zu deren Drehachse konzentrischen Kreislinie frei drehbar gelagert sind und von denen jeweils eine mit einer Gegendruckwalze, vorzugsweise einer Bürstenwalze, zur Perforierung einer durchlaufenden Materialbahn zusammenwirkt.

Nadelwalzen werden beispielsweise zur Perforierung von Papier- oder Kunststoffbahnen bei der Sackherstellung verwendet, um Kanäle zur Entlüftung der Säcke zu schaffen. Um unterschiedliche Lochmuster und/oder Löcher unterschiedlicher Durchmesser in die Bahnen einstechen zu können, sind in einem Drehgestell mehrere Nadelwalzen, vorzugsweise vier Nadelwalzen, revolverartig gelagert, um die jeweils gewünschte Nadelwalze schnell und einfach an die Bürstenwalze anstellen und mit dieser zusammenwirken lassen zu können. Die revolverartige Lagerung der Nadelwalzen in einem Drehgestell ist nicht nur zum Anbringen unterschiedlicher Löcher und/oder Lochmuster zweckmäßig, sondern auch zum Austausch von verschlissenen Nadelwalzen. Sind nämlich die Nadeln einer Nadelwalze stumpf geworden, kann eine andere in die Betriebsstellung gedreht und die herausgedrehte Nadelwalze ausgetauscht werden.

Beispielsweise bei der Herstellung von Säcken ist es erforderlich, die Nadelwalzen nicht kontinuierlich auf die durchlaufende Materialbahn einwirken zu lassen, da Perforationen in Bereichen unerwünscht sind, die später bei der Sackherstellung mit Klebstoffaufträgen, beispielsweise querverlaufenden Klebstoffstreifen, versehen werden, da sich dann der Klebstoff an Bereichen, die mit Perforationen versehen sind, durchdrücken könnte. Aus diesem Grunde wird bei bekannten Nadelwalzenanordnungen das Drehgestell mit sämtlichen Nadelwalzen zum Abrücken der mit der Bürstenwalze im Angriff befindlichen Nadelwalze vorzugsweise im Maschinentakt abgehoben und wieder angestellt. Diese Anordnung ist jedoch nachteilig, weil zum An- und Abstellen des Drehgestells mit den Nadelwalzen erhebliche Massen beschleunigt und abgebremst werden müssen, was zu einem erhöhten Verschleiß und einem unruhigen Lauf führt.

Aufgabe der Erfindung ist es daher, eine Nadelwalzenanordnung der eingangs angegebenen Art zu schaffen; bei der sich die mit der Bürstenwalze zusammenwirkende Nadelwalze mit verringertem Kraftaufwand von dieser abheben und an diese anstellen läßt.

Erfindungsgemäß wird diese Aufgabe bei einer Nadelwalzenanordnung der eingangs angegebenen Art dadurch gelöst, daß jede Nadelwalze von der Bürstenwalze abhebbar im Drehgestell gelagert und die mit der Bürstenwalze zusammenwirkende Nadelwalze jeweils mit einer Einrichtung zum Abheben von der Bürstenwalze und zum Anstellen an die Bürstenwalze versehen ist.

Bei der erfindungsgemäßen Nadelwalzenanordnung lassen sich die einzelnen, jeweils mit der Bürstenwalze zusammenwirkenden Nadelwalzen mit einem verringerten Kraftaufwand und daher auch einem verringerten Verschleiß von der Bürstenwalze abheben und an diese anstellen, weil nur die geringere Masse der Nadelwalze und nicht auch das Drehgestell mit sämtlichen Nadelwalzen zu bewegen ist.

Zweckmäßigerweise besteht das Drehgestell aus zwei auf einer in einem Gestell gelagerten zentralen Welle befestigten Scheibe, in denen die Nadelwalzen gelagert sind. Statt einer Scheibe könnten zur Lagerung der Nadelwalzen auch speichenartige Träger oder andere Trageinrichtungen vorgesehen sein.

Die Lagerungen der Nadelwalzen können in Führungen der Scheiben verschieblich sein, deren Mittellinien in der Betriebsstellung die Achsen der betreffenden Nadelwalze und der zentralen Welle schneiden.

Um ein schnelles und einfaches Abheben der jeweiligen in der Betriebsstellung befindlichen Nadelwalze zu ermöglichen, können die Lagerungen der Nadelwalzen in den Führungen in Richtung auf die zentrale Welle gegen Federkraft verschieblich sein.

In weiterer Ausgestaltung der Erfindung ist vorgesehen, daß die Nadelwalzen auf Achsen frei drehbar gelagert sind, deren Endbereiche in den Führungen der Scheiben oder Halterungen längsverschieblich geführt sind.

Die Lagerungen oder die Endbereiche der Achsen der Nadelwalzen können mit Flächen oder Führungsschuhen zum Angriff von die jeweilige Nadelwalze von der Bürstenwalze abhebenden Hebeln, Stößeln oder Rollen versehen sein.

Zum intermittierenden Abheben der in der Betriebsstellung befindlichen Nadelwalze kann ein von einer rotierenden Kurvenscheibe angetriebenes Hebelsystem und/oder ein Stößel vorgesehen sein. Zweckmäßigerweise ist die Kurvenscheibe im Maschinentakt angetrieben, so daß beispielsweise Lochungen der Bahn in Bereichen ausgespart werden, die für den späteren Klebstoffauftrag vorgesehen sind.

Die Zentralwelle kann zum Wechsel der mit der Bürstenwalze in Eingriff befindlichen Nadelwalze mit einem Antrieb versehen sein. Dieser Antrieb kann aus einem von Hand betätigbaren Antrieb oder aber auch aus einem Servomotor bestehen.

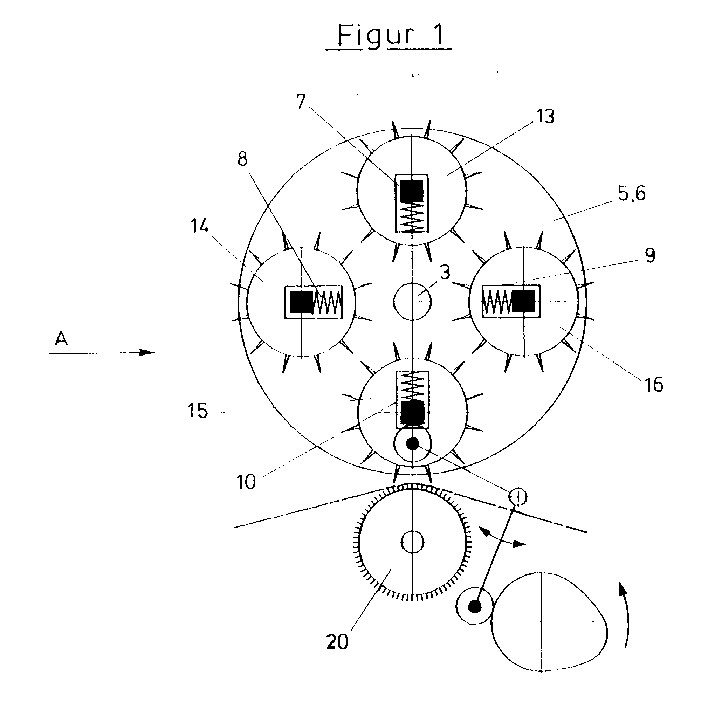

Ein Ausführungsbeispiel der Erfindung wird nachstehend anhand der Zeichnung näher erläutert. In dieser zeigt
- Fig. 1: eine Seitenansicht der Nadelwalzenanordnung in schematischer Darstellung und

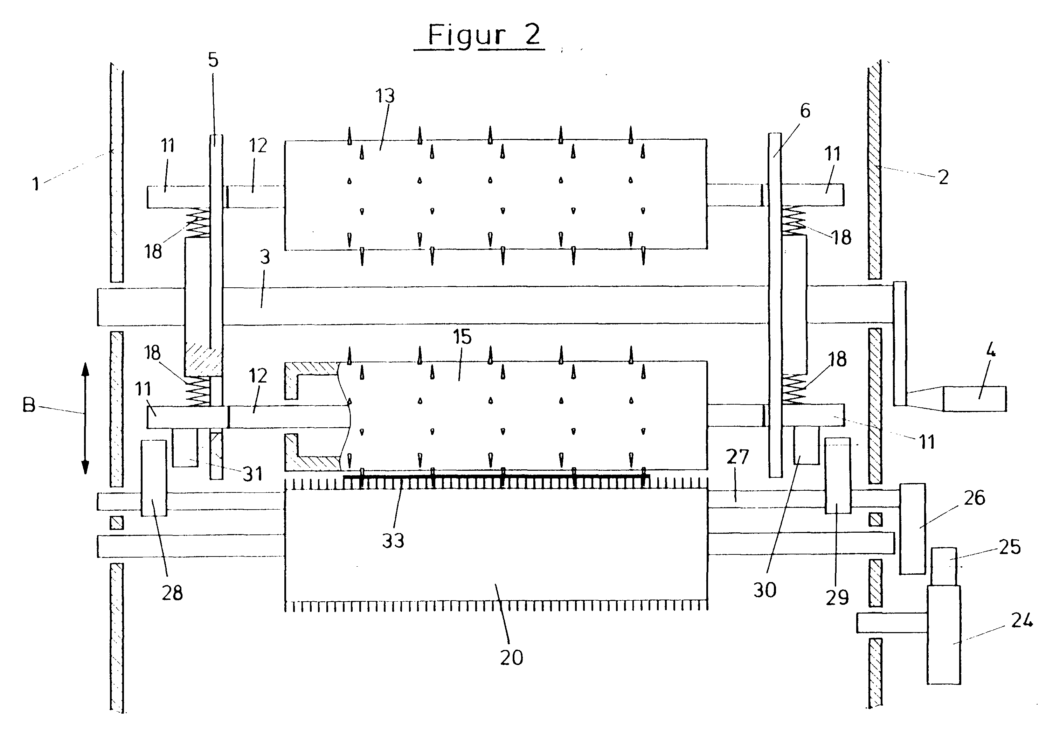

- Fig. 2: eine Ansicht der Nadelwalzenanordnung in Richtung des Pfeils A in Fig. 1

Die erfindungsgemäße Nadelwalzenanordnung besteht aus einer in den Seitenteilen 1, 2 eines Maschinengestells gelagerten zentralen Welle 3, die zu ihrer Drehung mit einem Antrieb, im vereinfacht dargestellten Ausführungsbeispiel mit einer Handkurbel 4, versehen ist. Auf der Welle 3 sind zwei Scheiben 5, 6 befestigt, die auf Durchmesserlinien mit Führungen versehen sind, die vereinfacht durch rechteckige Ausschnitte 7 bis 10 dargestellt sind. In diesen Ausschnitten sind die im Querschnitt viereckigen Enden 11 von Achsen 12 undrehbar aber längsverschieblich geführt, auf denen die Nadelwalzen 13 bis 16 frei drehbar gelagert sind. Die Nadelwalzen 13 bis 16 bestehen aus Zylindern, deren Mäntel mit radialen Nadeln gewünschter Längen und Durchmesser und in gewünschten Mustern versehen sind.

Die aus Vierkantstücken bestehenden Enden 11 der Wellen 12 sind durch Federn 18 in Richtung auf ihre radial äußere Stellung beaufschlagt. Statt der Federn können selbstverständlich auch Gasfedern oder Tellerfedern oder mit Dämpfungsmitteln kombinierte Federeinheiten vorgesehen sein.

Unterhalb des revolverartigen Drehgestells 3, 5, 6 ist in den Seitenteilen 1, 2 eine Gegendruckwalze 20, im dargestellten Ausführungsbeispiel eine Bürstenwalze, frei drehbar gelagert.

Die zentrale Welle 3 wird durch ihren Antrieb 4 in eine Stellung gedreht, in der die untere Nadelwalze 15 mit der Bürstenwalze 20 zusammenwirkt. Diese Stellung der unteren Nadelwalze 15 wird durch eine nicht dargestellte Arretierung gesichert.

Um die jeweilige durch das revolverartige Drehgestell in ihre Betriebsstellung gedrehte Nadelwalze im Maschinentakt von der Gegendruckwalze 20 abheben zu können, ist in dem Seitenteil 2 eine Kurvenscheibe 24 drehbar gelagert, die im Maschinentakt oder in dem vorgesehenen Bearbeitungstakt drehend angetrieben ist. Auf dieser Kurvenscheibe 24 läuft eine Rolle 25, die frei drehbar an einem Hebel 26 gelagert ist, der auf eine Welle 27 aufgekeilt ist, die in den Seitenteilen 1, 2 frei drehbar gelagert ist. An der Welle 27 sind parallel zueinander zwei Hebel 28, 29 befestigt, an deren freien Enden frei drehbare Rollen 30, 31 gelagert sind. Diese Rollen 30, 31 wirken mit den Betätigungsflächen der Endstücke 11 der jeweils in der Betriebsstellung befindlichen Achse der Nadelwalzen in der Weise zusammen, daß diese in dem durch den Umlauf der Kurvenscheibe 24 bestimmten Takt gegen die Wirkung der Federn 18 von der Bürstenwalze 20 in der Weise abgehoben wird, daß die Nadel außer Eingriff mit der durchlaufenden Materialbahn 33 kommen.

Die Anordnung der revolverartig in einem Drehgestell gelagerten Nadelwalzen zur Perforierung von Bahnen, die zu einem mehrlagigen Schlauch bei der Herstellung von Säcken zusammengeführt werden, ist beispielsweise aus der DE-OS 195 15 167.4 (Patentanmeldung Nr. 195 15 167.4-22 vom 08.02.1995) bekannt. Auf diese wird zur Erläuterung des Einsatzgebietes der erfindungsgemäßen Nadelwalzenanordnung Bezug genommen.

## Patentansprüche

1. Nadelwalzenanordnung mit mehreren, vorzugsweise vier Nadelwalzen, die in einem Drehgestell auf einer zu deren Drehachse konzentrischen Kreislinie frei drehbar gelagert sind und von denen jeweils eine mit einer Gegendruckwalze, vorzugsweise einer Bürstenwalze, zur Perforierung einer durchlaufenden Materialbahn zusammenwirkt,
**dadurch gekennzeichnet,**
**daß** jede Nadelwalze von der Bürstenwalze abhebbar im Drehgestell gelagert und die mit der Bürstenwalze zusammenwirkenden Nadelwalze jeweils mit einer Einrichtung zum Abheben von der Bürstenwalze und zum Anstellen an die Bürstenwalze versehen ist.

2. Nadelwalzenanordnung nach Anspruch 1, **dadurch gekennzeichnet, daß** das Drehgestell aus zwei auf einer in einem Gestell gelagerten zentralen Welle befestigten Scheiben besteht, in denen die Nadelwalzen gelagert sind.

3. Nadelwalzenanordnung nach Anspruch 1 oder 2, **dadurch gekennzeichnet, daß** die Lagerungen der Nadelwalzen in Führungen der Scheiben verschieblich sind, deren Mittellinien in der Betriebsstellung die Achsen der betreffenden Nadelwalze und der zentralen Welle schneiden.

4. Nadelwalzenanordnung nach einem Ansprüche 1 bis 3, **dadurch gekennzeichnet, daß** die Lagerungen der Nadelwalzen in den Führungen in Richtung auf die zentrale Welle gegen Federkraft verschieblich sind.

5. Nadelwalzenanordnung nach einem der Ansprüche 1 bis 4, **dadurch gekennzeichnet, daß** die Nadelwalzen auf Achsen frei drehbar gelagert sind, deren Endbereiche in den Führungen der Scheiben längsverschieblich geführt sind.

6. Nadelwalzenanordnung nach einem der Ansprüche 1 bis 5, **dadurch gekennzeichnet, daß** die Lagerungen oder die Endbereiche der Achsen der Nadelwalzen mit Flächen oder Führungsschuhen zum Angriff von die jeweilige Nadelwalze von der Bürstenwalze abhebenden Hebeln, Stößeln oder Rollen versehen sind.

7. Nadelwalzenanordnung nach einem der Ansprüche 1 bis 6, **dadurch gekennzeichnet, daß** zum intermittierenden Abheben der in der Betriebsstellung befindlichen Nadelwalze ein von einer rotierenden Kurvenscheibe angetriebenes Hebelsystem und/oder ein Stößel vorgesehen ist.

8. Nadelwalzenanordnung nach einem der Ansprüche 1 bis 7, **dadurch gekennzeichnet, daß** die zentrale Welle zum Wechsel der mit der Bürstenwalze im Eingriff befindlichen Nadelwalze mit einem Antrieb versehen ist.

## Claims

1. Pin-roller arrangement having a number of pin rollers, preferably four, which are freely rotatably mounted in a rotary frame on a circular line concentric with their axis of rotation and of which in each case one interacts with a back-pressure roller, preferably a brush roller, in order to perforate a running material web, **characterized in that** each pin roller is mounted in the rotary frame such that it can be lifted off the brush roller, and the pin roller interacting with the brush roller is in each case provided with a device for lifting it off the brush roller and setting it against the brush roller.

2. Pin-roller arrangement according to Claim 1, **characterized in that** the rotary frame comprises two discs which are fixed to a central shaft mounted in a frame and in which the pin rollers are mounted.

3. Pin-roller arrangement according to Claim 1 or 2, **characterized in that** the mountings of the pin rollers can be displaced in guides which belong to the discs and whose centre lines, in the operating position, intersect the axes of the relevant pin roller and of the central shaft.

4. Pin-roller arrangement according to one of Claims 1 to 3, **characterized in that** the mountings of the pin rollers can be displaced in the guides in the direction of the central shaft counter to spring force.

5. Pin-roller arrangement according to one of Claims 1 to 4, **characterized in that** the pin rollers are freely rotatably mounted on axles whose end regions are guided such that they can be displaced longitudinally in the guides belonging to the discs.

6. Pin-roller arrangement according to one of Claims 1 to 5, **characterized in that** the mountings or the end regions of the axles of the pin rollers are provided with areas or guide shoes for the action of the levers, plungers or rollers which lift the respective pin roller off the brush roller.

7. Pin-roller arrangement according to one of Claims 1 to 6, **characterized in that** in order that the pin roller located in the operating position can be lifted intermittently, a lever system and/or a plunger driven by a rotating cam disc is provided.

8. Pin-roller arrangement according to one of Claims 1 to 7, **characterized in that** for the purpose of changing the pin roller which is engaged with the brush roller, the central shaft 19 provided with a drive.

## Revendications

1. Agencement de cylindres de perforation équipé de plusieurs, de préférence de quatre rouleaux à aiguilles qui sont logés d'une manière librement tournante dans un bâti tournant sur une ligne circulaire concentrique à l'axe de rotation de ceux-ci et dont respectivement un coopère avec un rouleau de contre-pression, de préférence un rouleau à brosses, pour la perforation d'une bande de matériau défilant en continu,
**caractérisé**
**en ce que** chaque rouleau à aiguilles est logé d'une manière relevable du rouleau à brosses dans le bâti tournant et que le rouleau à aiguilles coopérant avec le rouleau à brosses est muni respectivement d'une installation pour le relevage depuis le rouleau à brosses et pour l'application au rouleau à brosses.

2. Agencement de cylindres de perforation selon la revendication 1, **caractérisé en ce que** le bâti tournant est constitué de deux disques fixés sur un arbre central logé dans un bâti, dans lesquels sont logés les rouleaux à aiguilles.

3. Agencement de cylindres de perforation selon la revendication 1 ou 2, **caractérisé en ce que** les logements des rouleaux à aiguilles sont déplaçables dans des guidages des disques, dont les lignes médianes coupent en position de fonctionnement les axes du rouleau à aiguilles concerné et de l'arbre central.

4. Agencement de cylindres de perforation selon l'une des revendications 1 à 3, **caractérisé en ce que** les logements des rouleaux à aiguilles sont déplaçables dans les guidages en direction de l'arbre central contre une force de ressort.

5. Agencement de cylindres de perforation selon l'une des revendications 1 à 4, **caractérisé en ce que** les rouleaux à aiguilles sont logés d'une manière librement tournante sur des axes, dont les zones d'extrémité sont guidées d'une manière déplaçable longitudinalement dans les guidages des disques.

6. Agencement de cylindres de perforation selon l'une des revendications 1 à 5, **caractérisé en ce que** les logements ou les zones d'extrémité des axes des rouleaux à aiguilles sont munis de faces ou de patins de guidage pour l'application de leviers, de poussoirs ou de rouleaux relevant le rouleau à aiguilles respectif du rouleau à brosses.

7. Agencement de cylindres de perforation selon l'une des revendications 1 à 6, **caractérisé en ce que** pour le relevage par intermittence du rouleau à aiguilles se trouvant en position de fonctionnement, il est prévu un système à leviers et/ou un poussoir entraîné par un disque à came tournant.

8. Agencement de cylindres de perforation selon l'une des revendications 1 à 7, **caractérisé en ce que** l'arbre central, pour l'échange du rouleau à aiguilles en prise avec le rouleau à brosses, est pourvu d'un entraînement.
